(19) Europäisches Patentamt
European Patent Office
Office européen des brevets

(11) **EP 4 668 168 A1**

(12) **EUROPEAN PATENT APPLICATION**

(43) Date of publication:
**24.12.2025 Bulletin 2025/52**

(21) Application number: **25166242.5**

(22) Date of filing: **26.03.2025**

(51) International Patent Classification (IPC):
**G06N 3/098** (2023.01)    **G06N 3/045** (2023.01)

(52) Cooperative Patent Classification (CPC):
**G06N 3/098; G06N 3/045**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.06.2024 IN 202421047604**

(71) Applicant: **Tata Consultancy Services Limited
Mumbai, Maharashtra 400 021 (IN)**

(72) Inventors:
• **MANDAL, Soyenka
700156 Kolkata, West Bengal (IN)**

• **CHATTOPADHYAY, Dhiman
700156 Kolkata, West Bengal (IN)**
• **GHOSHDASTIDER, Mainak
700156 Kolkata, West Bengal (IN)**
• **NASKAR, Soumitra
700156 Kolkata, West Bengal (IN)**
• **GHOSH DAS, Tania
700156 Kolkata, West Bengal (IN)**

(74) Representative: **Goddar, Heinz J.
Boehmert & Boehmert
Anwaltspartnerschaft mbB
Pettenkoferstrasse 22
80336 München (DE)**

(54) **PARTICIPATORY DISTRIBUTED CONFEDERATE MLOPS FRAMEWORK WITH STOCHASTIC OPTIMIZATION AND AFFINITY INDEX-BASED SELECTION OF COLLABORATING MEMBERS**

(57)    State of art techniques. A method and system for participatory Distributed Confederate Machine Learning Operations (MLOps) framework with Stochastic Optimization and affinity index-based selection of collaborating members is disclosed. , in accordance with some embodiments of the present disclosure. The MLOps framework addresses the gap in the space of federated learning by enabling or supporting data sharing within group having members with commonality. The commonality is defined based on an affinity index based grouping of members participating in collaborative learning. Even after data sharing, the data may still be insufficient, thus Time series based data augmentation techniques using Generative AI can be used to generate synthetic data for initial training iterations. The client and server/aggregator time allotment during the training of ML models is guided by stochastic gradient descent optimization (SDCA) enabling faster convergence with desirable ML accuracy.

FIG. 2B

System 100 (MLOps framework)

EP 4 668 168 A1

**Description**

CROSS-REFERENCE TO RELATED APPLICATIONS AND PRIORITY

The present application claims priority to Indian application no. 202421047604, filed on June 20, 2024.

TECHNICAL FIELD

The embodiments herein generally relate to the field of federated machine earning (ML) and, more particularly, to a method and system for participatory Distributed Confederate ML Operations (MLOps) **framework** with Stochastic Optimization and affinity index-based selection of collaborating members.

BACKGROUND

In the age of building enhanced Machine Learning (ML) models, large volumes of heterogeneous data has to be handled with due consideration to data security, data privacy, data access and the like. Federated learning approach enables collaborative ML without centralized training data for training ML models. Need for exchange of data from client devices to global or central servers for training models is eliminated, instead, the raw data on client devices, also referred as client nodes is used to train the model locally of each node. Updates or model parameters from the trained models on the nodes are aggregated at central server and learnt by the central or main model. Since the data being used by each local device or client node is from diverse sources, the federated learning aims to build generalizable ML models, which are reshared with client nodes. The learning of the shared model further continues over iterations.

Even though federated learning offers a good solution for generalization of models, it has technical limitations while building ML models in certain types of domains, specifically where data scarcity exist at individual client nodes and data sharing is needed, for example, in domain of automotive manufacturing and software defined vehicle (SDV).

New techniques that address data scarcity and data quality by enabling controlled or supervised data sharing within federated learning, while observing the data privacy, data access and data security aspects provided by federated learning need to be explored.

SUMMARY

Embodiments of the present disclosure present technological improvements as solutions to one or more of the above-mentioned technical problems recognized by the inventors in conventional systems.

For example, in one embodiment, a method for participatory Distributed Confederate Machine Learning Operations (MLOps) framework with Stochastic Optimization and affinity index-based selection of collaborating members is provided. The method includes receiving from a plurality of client nodes, willingness to participate in collaborative learning with data sharing within a participatory distributed confederate Machine Learning Operations (MLOps) framework, wherein each client node among the plurality of client nodes is characterized by a feature set.

Further, the method includes segregating the plurality of client nodes into a plurality of groups comprising one or more members selected from among the plurality of client nodes based on an affinity index, wherein the affinity index is computed as normalized Root Mean Squared distance in a feature space of feature set of the of the plurality of client nodes.

Furthermore, the method includes initiating learning at group level, over a basic ML model shared by the central distributed aggregator to generate a learned ML model for a target objective, by a member of each group among the plurality of groups by enabling collaboration and data sharing within member of each group.

Further, the method includes initiating aggregation, via an intra-group aggregator associated with each group, of the learned model of each member within a group and adjusting a set of hyperparameters and associated weights to generate a larger ML model for the group, wherein the larger model is shared with each member of the associated group for successive learning iterations.

Furthermore, the method includes performing aggregation and tuning via an inter-group aggregator from among a plurality of inter-group aggregators, of bias, weights and hyperparameters associated with the larger ML model from among a set of members across the plurality of groups that have at least partial mapping within the feature space in accordance with a feature matching criteria. The aggregated and tuned weights and hyperparameters are learnt to generate a final ML model, and wherein the final ML model is shared with each of the plurality of client nodes.

In another aspect, a system for participatory Distributed Confederate ML Operations (MLOps) **framework** with Stochastic Optimization and affinity index-based selection of collaborating members is provided. The system comprises a memory storing instructions; one or more Input/Output (I/O) interfaces; and one or more hardware processors coupled to the memory via the one or more I/O interfaces, wherein the one or more hardware processors are configured by the instructions to receiving from a plurality of client nodes, willingness to participate in collaborative learning with data sharing within a participatory distributed confederate Machine Learning Operations (MLOps) framework, wherein each client node among the plurality of client nodes is characterized by a feature set.

Further, the one or more hardware processors are configured to segregate the plurality of client nodes into a plurality of groups comprising one or more members selected from among the plurality of client nodes based on an affinity index, wherein the affinity index is computed as normalized Root Mean Squared distance in a feature space of feature set of the of the plurality of client nodes.

Furthermore, the one or more hardware processors are configured to initiate learning at group level, over a basic ML model shared by the central distributed aggregator to generate a learned ML model for a target objective, by a member of each group among the plurality of groups by enabling collaboration and data sharing within member of each group.

Further, the one or more hardware processors are configured to initiate aggregation, via an intra-group aggregator associated with each group, of the learned model of each member within a group and adjusting a set of hyperparameters and associated weights to generate a larger ML model for the group, wherein the larger model is shared with each member of the associated group for successive learning iterations.

Furthermore, the one or more hardware processors are configured to perform aggregation and tuning via an inter-group aggregator from among a plurality of inter-group aggregators, of bias, weights and hyperparameters associated with the larger ML model from among a set of members across the plurality of groups that have at least partial mapping within the feature space in accordance with a feature matching criteria. The aggregated and tuned weights and hyperparameters are learnt to generate a final ML model, and wherein the final ML model is shared with each of the plurality of client nodes.

In yet another aspect, there are provided one or more non-transitory machine-readable information storage mediums comprising one or more instructions, which when executed by one or more hardware processors causes a method for participatory Distributed Confederate ML Operations (MLOps) **framework** with Stochastic Optimization and affinity index-based selection of collaborating members.

The method includes receiving from a plurality of client nodes, willingness to participate in collaborative learning with data sharing within a participatory distributed confederate Machine Learning Operations (MLOps) framework, wherein each client node among the plurality of client nodes is characterized by a feature set.

Further, the method includes segregating the plurality of client nodes into a plurality of groups comprising one or more members selected from among the plurality of client nodes based on an affinity index, wherein the affinity index is computed as normalized Root Mean Squared distance in a feature space of feature set of the of the plurality of client nodes.

Furthermore, the method includes initiating learning at group level, over a basic ML model shared by the central distributed aggregator to generate a learned ML model for a target objective, by a member of each group among the plurality of groups by enabling collaboration and data sharing within member of each group.

Further, the method includes initiating aggregation, via an intra-group aggregator associated with each group, of the learned model of each member within a group and adjusting a set of hyperparameters and associated weights to generate a larger ML model for the group, wherein the larger model is shared with each member of the associated group for successive learning iterations.

Furthermore, the method includes performing aggregation and tuning via an inter-group aggregator from among a plurality of inter-group aggregators, of bias, weights and hyperparameters associated with the larger ML model from among a set of members across the plurality of groups that have at least partial mapping within the feature space in accordance with a feature matching criteria. The aggregated and tuned weights and hyperparameters are learnt to generate a final ML model, and wherein the final ML model is shared with each of the plurality of client nodes.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

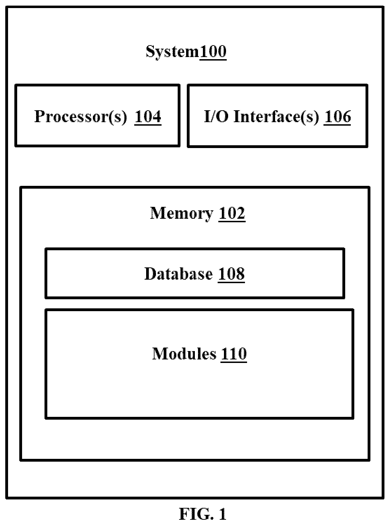

FIG. 1 is a functional block diagram of a system for participatory Distributed Confederate Machine Learning Operations (MLOps) **framework** with Stochastic Optimization and affinity index-based selection of collaborating members, in accordance with some embodiments of the present disclosure.

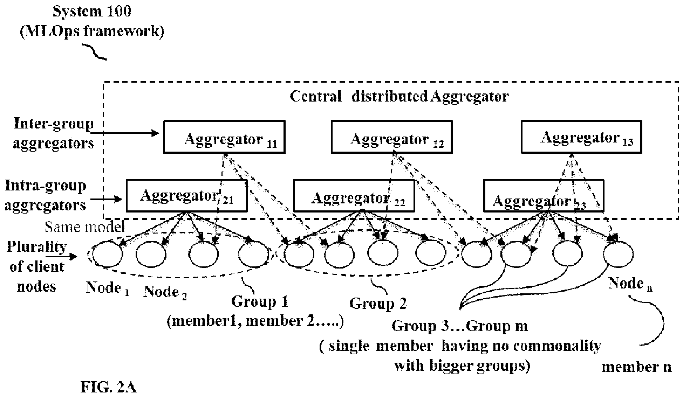

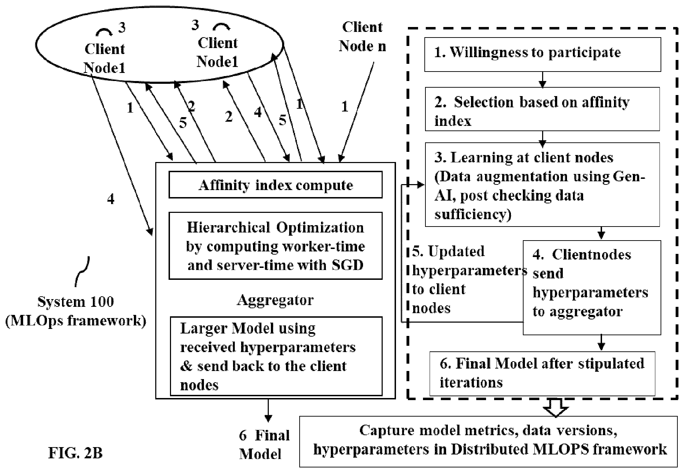

FIGS. 2A and 2B (collectively referred as FIG. 2) illustrate an architectural overview of the system of FIG. 1A, in accordance with some embodiments of the present disclosure.

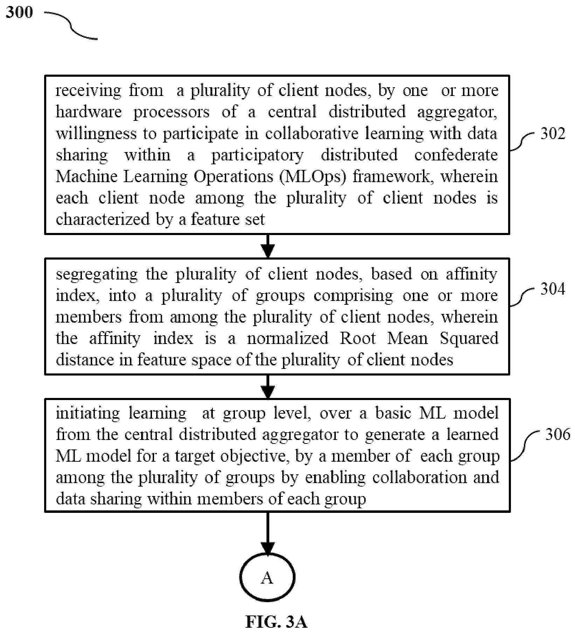

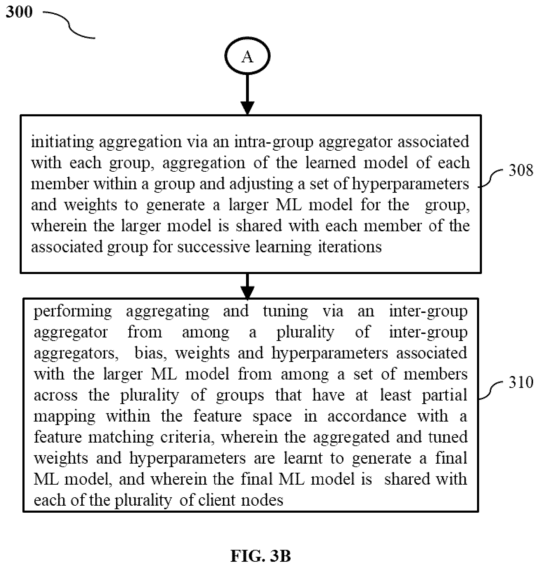

FIGS. 3A and 3B (collectively referred as FIG. 3) is a flow diagram illustrating a method for participatory distributed confederate MLOps **framework** with Stochastic Optimization and affinity index-based selection of collaborating members, using the system depicted in FIG. 1, FIG. 2A and 2B, in accordance with some embodiments of the present disclosure.

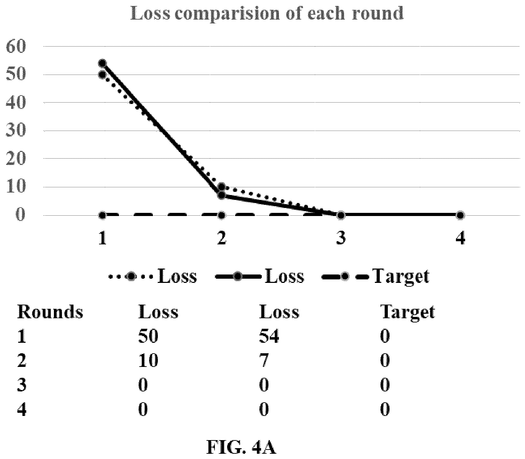

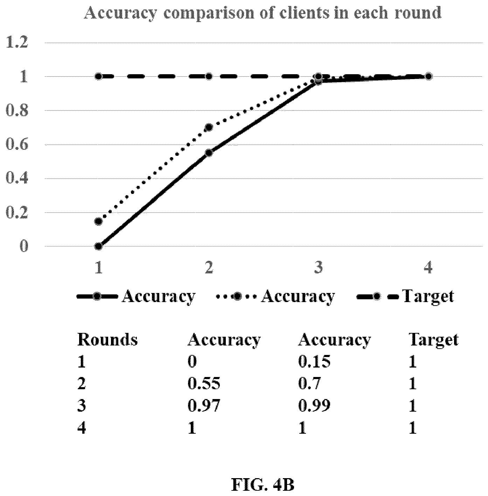

FIGS. 4A and 4B (collectively referred as FIG. 4) are visualizations highlighting performance trajectory of each client, offering insights into their respective training dynamics and convergence patterns during training of ML model via the MLOps framework offered by the system of FIG. 2A and 2B, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In automotive manufacturing and software defined vehicle (SDV) domain, sensors capture various data related to different parameters of the car which may be utilized to build different machine learning (ML) models. However, a common problem is that the data obtained from various sensors cannot be shared among vehicles of different make and model due to privacy issues. That calls for federated learning as the solution. Moreover, transferring the data to the cloud hosted server would involve huge data transfer costs, which may not be viable for business. The dataset may be used for certain make and model to train the machine learning model for various purpose like remaining battery life prediction, remaining mileage prediction, optimum clutch gear usage recommendation etc. Thus, a solution is to orchestrate individual machine learning models at the unit level per make and model. However, data insufficiency and data quality is a concern for building the machine learning model. So, there is also a need to share data among similar products manufactured by same vendors for similar categories of products like cars of same segments. For e.g. hatchback models from same manufacturer often share the same parts which may call for wise data sharing for building machine learning models. Thus, group based collaboration within federated machine learning is required.

Embodiments of the present disclosure provide a method and system for participatory Distributed Confederate Machine Learning Operations (MLOps) **framework** with Stochastic Optimization and affinity index-based selection of collaborating members. The system, interchangeably referred to as MLOps framework, addresses the gap in the space of federated learning by enabling or supporting data sharing within groups having members with commonality. The commonality is defined based on an affinity index based grouping of members participating in collaborative learning. Even after data sharing, the data may still be insufficient, thus Time Series data augmentation techniques using Generative Artificial Intelligence (AI) can be used to generate synthetic data for initial training iterations.

Further, in the participatory distributed confederate approach disclosed herein, the client and server/aggregator time allotment during the training of ML models is guided by an hierarchical optimization approach to reduce the communication overhead and improve the convergence speed. The hierarchical optimization is implemented via a Stochastic Gradient Descent optimization (SGD). Even though use of SGD is known in federated learning, it has been focused on tasks like saving network bandwidth, variance reduction etc., and hardly any attempt is towards the ML model training time aspect. The SGD herein provides a mechanism to achieve the required model accuracy in less convergence time by optimizing the allotment of the worker (member/ node) and server (aggregator) time. The training time management using the SGD optimization for the client server time allotment reduces the cost function in smaller time thereby achieving the acceptable accuracy within a stipulated time of federation among clients and aggregators. Further, the disclosed collaborative learning within the federated learning technique based on groupwise participation in accordance with feature affinity enables client nodes to develop individual models based on shared data among each other participant. This learning accuracy is increased by decreasing the cost function. The job of decreasing the cost function when multiple participants are involved in federated learning is a technical challenge which is addressed in the mathematical proposition disclosed herein, which is based on SGD.

Referring now to the drawings, and more particularly to FIGS. 1 through 4B, where similar reference characters denote corresponding features consistently throughout the figures, there are shown preferred embodiments, and these embodiments are described in the context of the following exemplary system and/or method.

FIG. 1 is a functional block diagram of a system 100 for participatory distributed confederate Machine Learning Operations (MLOps) **framework** with Stochastic Optimization and affinity index-based selection of collaborating members, in accordance with some embodiments of the present disclosure.

In an embodiment, as depicted in FIG. 2A, the system 100, also referred to as MLOps framework, includes devices such as a central distributed aggregator further controlling and coordinating with a plurality of intra-group aggregators, a plurality of inter-group aggregators and a plurality of client nodes. The system 100 includes processor(s) 104, communication interface device(s), alternatively referred as input/output (I/O) interface(s) 106, and one or more data storage devices or a memory 102 operatively coupled to the processor(s) 104, which control and coordinate execution of the MLOps framework depicted in FIG. 2A. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like that function as the plurality of client nodes, the plurality of inter-group and intra-group aggregators, and the central distributed aggregator.

The I/O interface(s) 106 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices, thus, enabling communication among the plurality of client nodes, the plurality of inter-group and intra-group aggregators, and the central distributed aggregator during the distributed confederate ML.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110 such as basic learning model at the central distributed aggregator that is initially during start of the training is communicated to the plurality of nodes, intermediate large ML model for each group of client nodes, the final ML model that generated at the central distributed aggregator by aggregating learnt parameters from intra-aggregators and inter-aggregators. Each of the plurality of client nodes further store the final ML model to be used during inferencing stage for predicting target variables the model is trained for.

The plurality of modules 110 include programs or coded instructions that supplement applications or functions performed by the system 100 for executing different steps involved in the process of participatory Distributed Confederate Machine Learning Operations (MLOps) with Stochastic Optimization and affinity index-based selection of collaborating members, being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system100 and methods of the present disclosure.

Further, the memory 102 includes a database 108. The database (or repository) 108 may include a plurality of abstracted pieces of code for refinement and data that is processed, received, or generated as a result of the execution of the plurality of modules in the module(s) 110.

Although the database 108 is shown internal to the system 100, it will be noted that, in alternate embodiments, the database 108 can also be implemented external to the system 100, and communicatively coupled to the system 100. The data contained within such external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in flow diagrams in FIG. 2 through FIG. 3.

FIGS. 2A and 2B (collectively referred as FIG. 2) illustrates an architectural overview of the system of FIG. 1A, in accordance with some embodiments of the present disclosure. FIG. 2 will be better understood in context of a method 300 explained in FIG. 3 below.

The system 100 or the MLOps framework comprises the central distributed aggregator that control and coordinates for ML model training via the plurality of client nodes with their local data via to-and-fro iterations between training and aggregation stages. This flow of to and from ML model training, aggregating, and tuning is supported by the MLOps framework created using a continuous integration and continuous deployment (CI/CD) pipeline manager, code, and repository, a MLOps orchestrator and visualization UI.

During the training stage, there a basic ML model runs across a subset of client nodes, wherein the client nodes trains the basic model on their individual data. However, some nodes may form a group and among the group there may be participatory federated learning based on common features of the individual participating nodes. During the group formation, the criterion of participation is governed by the proposed affinity index for selecting collaborating members where participating members are selected based on the affinity index. There are two level aggregators federating the machine learning training distribution among participatory nodes. The first level aggregator ( intra-group aggregator) aggregates individual learned models and adjusts the hyperparameters and weights to create a fine-tuned ML model to address the larger group. The second level aggregator (inter-group aggregator) may federate among different participatory learning groups for a target objective where features match among the subgroups. The features may not be 100% identical for all the participatory nodes, however commonality of features and target objective should match among the nodes. The fine tuning of bias, weights and hyperparameters are fed back to individual nodes for the next round of training. There may be some client nodes where sufficient training data is not available. Synthetic data will be generated for data augmentation using Generative AI techniques like Generative Adversarial Network (GAN ) and Time-series Transformer with Attention Network etc. However the data used as feed to the generative AI module is selected based on feature similarity. For example, the automotive data of a brand new car model can be augmented using the available data from existing cars of same make and similar segment model, engine type and internal parts. This happens in step 3 of FIG 2B, data augmentation is optional as data sufficiency check is performed first before learning

FIGS. 3A and 3B (collectively referred as FIG. 3) is a flow diagram illustrating a method 300 for participatory distributed confederate MLOps **framework** with Stochastic Optimization and affinity index-based selection of collaborating members, using the system depicted in FIG. 1, 2A and 2B, in accordance with some embodiments of the present disclosure.

In an embodiment, the system 100 comprises one or more data storage devices or the memory 102 operatively coupled to the processor(s) 104 and is configured to store instructions for execution of steps of the method 300 by the processor(s) or one or more hardware processors 104. The steps of the method 300 of the present disclosure will now be explained with reference to the components or blocks of the system 100 as depicted in FIGS. 1, 2A and 2B and the steps of flow diagram as depicted in FIG. 3. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

As mentioned, for certain domains such as automotive manufacturing domains, Industrial IoT use cases in Software defined vehicle, energy and utilities , chemical process industry, there exists challenges of data quality and data insufficiency, and there is need to enable collaboration within federated leaning while maintaining data privacy or addressing data accesses concerns.

Referring to the steps of the method 300, at step 302 of the method 300, the one or more hardware processors 104 of the central distributed aggregator are configured by the instructions to receive, from a plurality of client nodes, willingness to participate in the participatory distributed confederate collaborative Machine Learning Operations (MLOps) framework. Each client node among the plurality of client nodes is characterized by a feature set and has agreed for data sharing during training of ML models for an target objective.

The plurality of client nodes communicate among each other with their possessed feature information and query other client nodes on participation intent for collaborative learning, on receiving the peer confirmation the clients pair up to form group. The pairing will be at intra group or inter group level based on the features type. Client nodes with similar features sets with features like vehicle make and model, operating in similar temperature ranges and geographic locations, having same type of engine with parameters like rpm, torque, fuel efficiency, CO emission level, battery state ,discharge cycle etc., are grouped together to optimize federated learning performance. For instance, client nodes with the same make and model of electric vehicle operating in cold climates can share data to improve battery aging predictions specific to those conditions.

As understood, even though the client nodes willingly share the data for training, a quality or effective training for given target objective would need data with similar features. Thus, at step 304 of the method 300, the one or more hardware processors 104 are configured by the instructions to segregate, based on the affinity index, the plurality of client nodes into a plurality of groups. Each group comprises one or more members from among the plurality of client nodes. The affinity index is computed as normalized Root Mean Squared distance in feature space of the feature set of the plurality of client nodes. Normalized Root Mean Squared Distance in feature space

$$= \left[ \sum (F_{1i} - F_{2i})^2 \right]^{1/2} / \sum | (F_{1i} - F_{2i}) | \quad (1)$$

Where $F_{1i}$ and $F_{2i}$ represents $i^{th}$ feature of member 1 and 2 within the plurality of client nodes. The members within each group are also referred to as collaborating members

As mentioned, grouping is based on the affinity index , wherein the affinity index denotes how similar are the features of data from different participating members. In the type of federated learning disclosed herein, the collaborative members are selected based on the willingness to share their data as well as the similarity in nature of data i.e. has mostly similar features with that of the other collaborative members . For e.g. two cars of same make and model can form one intra group whereas different variant cars of same segment from same make can form one inter-group for collaborative learning.

At step 306 of the method 300, the one or more hardware processors 104 controlling and coordination among the devices of the system enable learning at group level via a member of each group among the plurality of groups, over a basic Machine Learning (ML) model received from the central distributed aggregator to generate a learned ML model for a target objective, for example Remaining Battery Life prediction. The learning includes collaboration and data sharing within members (collaborating members) of each group;

At step 308 of the method 300, the one or more hardware processors 104 are configured by the instructions via an intra-group aggregator associated with each group, to perform aggregation of the learned ML model of each member within a group and adjusting a set of hyperparameters and weights to generate a larger ML model for the group. The larger ML model is shared with each member of the associated group for successive learning iterations by the intra-aggregator.

At step 310 of the method 300, the one or more hardware processors 104 via an inter-group aggregator from among a plurality of inter-group aggregators, are configured by the instructions to aggregate and tune, bias, weights and hyperparameters associated with the larger ML model from among a set of members across the plurality of groups that have at least partial mapping within the feature space of the feature set in accordance with a feature matching criteria. The tuned weights and hyperparameters are shared with each of the plurality of client nodes to generate a final model.

In the MLOps framework or system 100 a client node and the aggregator training time allotment and number of iterations during training is guided by the SGD optimization providing hierarchical optimization to enable training convergence of the final ML model for the target objective (such as Remaining Battery Life prediction, machine failure prediction or the like) achieving an predefined ML model accuracy criteria. Hierarchical Optimization is mainly designed to reduce the communication overhead and improve the convergence speed. The disclosed SGD based gradient aggregation ensures that batches of mismatched data are de-emphasized when aggregated together. Each of the algorithmic improvements is shown to provide an additive improvement in model performance and convergence speed for training.

Initially, local models are trained on each of the working/client nodes. The starting ML model, also referred as simply model, for each client node is the server model i.e. 'W(s)' at time stamp t1. At the end of the training iterations on the nodes, a smooth version of the gradient 'g' tilde of 'j' is estimated as one gradient per node 'j'. The smooth gradient is the difference between the starting model and the trained model. The 'j' gradients are weighted with alpha 'j' as part of aggregation step. The federated average is a subcase where all weights are equal. The final gradient is then used for updating the server-side model. Here SGD optimizer is used. Finally, a replay step on the server (central distributed aggregator) is introduced as a regularizer for the ML model. This repeat or replay steps ensure that the model does not drift too far from the task in focus. This repetitive task is achieved through Continuous Machine Learning Operations.

Pseudocode 1: **Hierarchical Optimization & Dynamic Gradient Aggregation**

- Run training iterations on client/worker nodes 'j' (t in "worker-time")

$$w_{t+1}^{(j)} = w_t^{(j)} - \eta_w \nabla w_t$$

- Estimate smoothed gradient approximations in ("server-time") T

$$\tilde{g}_T^{(j)} = w_T^{(j)} - w_{T-1}^{(s)}$$

- Aggregate weighted gradients and update the final ML model, also referred to as global model. Final model will evolve after successive iterations in client level and subsequent aggregator level learning and hyperparameter feedback from aggregator to clients for next iteration learning. The process will continue as per our proposed hierarchical optimization and SGD techniques which will improve the accuracy within the stipulated time.

$$w_T^{(s)} = w_{T-1}^{(s)} - \eta_s \sum_j \alpha^{(j)} \tilde{g}_T^{(j)}$$ , where summation indicates weighted aggregation

- Run server-side training iterations (t iterations in "worker-time")

$$w_{t+1}^{(s)} = w_t^{(s)} - \eta_w \nabla w_t^{(s)}$$

- Repeat

Once the final ML model is obtained, it is deployed at each of the plurality of client nodes to predict the target objective value for real time inputs received during inferencing stage.

Steps carried out during end to end ML model training using the disclosed participatory Distributed Confederate Machine Learning Operations (MLOps) **framework for two client nodes is explained below:**

**Pre-processing and data understanding: Data cleansing is first step in ML for denoising the data. Techniques well known in the art that address missing data/ null values, duplicate data, outliers present in data, erroneous Data, presence of irrelevant data can be used. Also some COTS data transformation techniques are also part of preprocessing**

**Noise estimation:** There are various noise estimation techniques in data science available in technical literature, one common technique, used herein, is to discard data points beyond a threshold where the threshold is determined by a factor or standard deviation of data points. **Based on noise estimation the number of feedback to be taken before retraining the neural network is decided.**

**Data Sufficiency estimation:** Data sufficiency can be checked by plotting data points against certain range to understand how concentrated or distributed the data points are. Then accordingly data analyst decide whether to discard null or average existing data points to extrapolate missing data. **Based on data sufficiency the confidence (probability of improvement) of the prediction can be derived.**

**User Interface:** The system 100 provides a that includes a screen display with three windows in a single window which includes the central distributed aggregator, also referred as server herein after, and client nodes (client1 and client2) along with their individual outputs after every execution step.

**Server Startup:** A command triggers the initialization of global parameters and prompts the server to request and await the initial parameters from one of the random clients. This step is crucial for setting up the server environment and establishing communication with the client nodes for federated learning tasks.

**Federated Learning Initialization:** Following the server initialization, the federated learning process does not commence until the server receives parameters from at least one ML model trained on the data of any of the client nodes (the learned ML model). This ensures that the federated learning environment is appropriately set up and ready to proceed with collaborative model training across the client nodes.

**Aggregation Readiness:** Once the server (central distributed aggregator) receives parameters from at least one ML model from a client node, the federated learning process begins. However, the aggregation process does not commence until the server receives parameters from at least two clients. This ensures that the federated learning process progresses only when the necessary prerequisites, such as parameter availability (minimum number of clients as specified by the user), are met, before aggregating the parameters to update the global model. By waiting for input from multiple sources, the aggregation process aims to enhance the robustness and accuracy of the updated global model. With the second client node now connected, the server has received model parameters from at least two clients, triggering the commencement of the aggregation process. This ensures that the federated learning process proceeds with contributions from multiple client nodes, enhancing the diversity and effectiveness of the aggregated model updates.

**Aggregation Completion:** Following the initiation of the aggregation process with inputs from at least two client nodes, the process completes, resulting in the generation of one aggregated ML model (larger ML model). This larger ML model comprises the inputs and information from both the models trained on different client data. This marks the end of the first round of the aggregation federated learning process, culminating in the creation of a unified model that integrates insights from multiple sources. This new ML model is sent back to every client which replace their previous models and can be used for the second round of training process.

**Final Round Completion:** In the final step of the federated learning process, the aggregation concludes after the specified number of rounds, in this case, the fourth round (as declared by the user beforehand). At this stage, the federated learning process has iterated through multiple rounds of model aggregation and updates, culminating in the final aggregation model (final ML model). A command line interface displays the results of loss and accuracy, providing insights into the performance of the federated learning model after the completion of all rounds. This signifies the successful execution of the federated learning process, resulting in an aggregated model (final ML model) optimized for the given task, target objective such as Remaining Battery Life prediction.

FIGS. 4A and 4B (collectively referred as FIG. 4) are visualizations highlighting performance trajectory of each client, offering insights into their respective training dynamics and convergence patterns during training of ML model via the MLOps framework, in accordance with some embodiments of the present disclosure. The plots in the FIGS. 4A and 4B illustrate the training progress of two clients over four rounds of federated learning aggregation. Each client utilized a distinct dataset to enhance model robustness. The left plot shows the evolution of loss values for both clients across the rounds, while the right plot depicts changes in accuracy. The visualizations highlight the performance trajectory of each client, offering insights into their respective training dynamics and convergence patterns. Thus, with the system 100 used for training, the error reduces whereas accuracy increases in each round of iterations as evident in graph.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (300) for federated Machine Learning (ML), the method comprising:

   receiving (302) from a plurality of client nodes, by one or more hardware processors of a central distributed aggregator, willingness to participate in collaborative learning with data sharing within a participatory distributed confederate Machine Learning Operations (MLOps) framework, wherein each client node among the plurality of client nodes is **characterized by** a feature set;

   segregating (304), the by one or more hardware processors of the central distributed aggregator, the plurality of client nodes into a plurality of groups comprising one or more members selected from among the plurality of client nodes based on an affinity index, wherein the affinity index is computed as normalized Root Mean Squared distance in a feature space of the feature set of the plurality of client nodes; initiating learning at group level (306), the by one or more hardware processors of the central distributed aggregator, over a basic ML model shared by the central distributed aggregator to generate a learned ML model for a target objective, by a member of each group among the plurality of groups by enabling collaboration and data sharing within member of each group; initiating aggregation (308) the by one or more hardware processors of the central distributed aggregator, via an intra-group aggregator associated with each group, of the learned model of each member within a group and adjusting a set of hyperparameters and associated weights to generate a larger ML model for the group, wherein the larger model is shared with each member of the associated group for successive learning iterations; and performing aggregation and tuning (310), the by one or more hardware processors of the central distributed aggregator via an inter-group aggregator from among a plurality of inter-group aggregators, of bias, weights and hyperparameters associated with the larger ML model from among a set of members across the plurality of groups that have at least partial mapping within the feature space in accordance with a feature matching criteria, wherein the aggregated and tuned weights and hyperparameters are learnt to generate a final ML model, and wherein the final ML model is shared with each of the plurality of client nodes.

2. The processor implemented method (300) as claimed in claim 1, wherein learning time and number of iterations during learning process between each client node, and the intra aggregator or the inter-aggregator is guided by Stochastic Gradient Descent (SGD) optimization providing hierarchical optimization to enable training convergence of the final model for the target objective achieving an predefined ML model accuracy criteria.

3. The processor method (300) as claimed in claim 2, wherein during initial training iterations, data insufficiency present with a member in a group among the plurality of groups is augmented with synthetic data generated from time series based data augmentation techniques using generative Artificial Intelligence (Gen-AI) model.

4. The processor implemented method (300) as claimed in claim 1, wherein the final model is deployed at each of the plurality of client nodes to predict the target objective value for real time inputs received during inferencing stage.

5. A system (100) for federated Machine Learning (ML), the system (100) comprising:
a central distributed aggregator comprising:

a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:

receive from a plurality of client nodes, willingness to participate in collaborative learning with data sharing within a participatory distributed confederate Machine Learning Operations (MLOps) framework, wherein each client node among the plurality of client nodes is **characterized by** a feature set;
segregate the plurality of client nodes into a plurality of groups comprising one or more members selected from among the plurality of client nodes based on an affinity index, wherein the affinity index is computed as normalized Root Mean Squared distance in a feature space of the feature set of the plurality of client nodes;
initiate learning at group level over a basic ML model shared by the central distributed aggregator to generate a learned ML model for a target objective, by a member of each group among the plurality of groups by enabling collaboration and data sharing within member of each group;
initiate aggregation via an intra-group aggregator associated with each group, of the learned model of each member within a group and adjusting a set of hyperparameters and associated weights to generate a larger ML model for the group, wherein the larger model is shared with each member of the associated group for successive learning iterations; and
perform aggregation and tuning via an inter-group aggregator from among a plurality of inter-group aggregators, of bias, weights and hyperparameters associated with the larger ML model from among a set of members across the plurality of groups that have at least partial mapping within the feature space in accordance with a feature matching criteria, wherein the aggregated and tuned weights and hyperparameters are learnt to generate a final ML model, and wherein the final ML model is shared with each of the plurality of client nodes.

6. The system (100) as claimed in claim 5, wherein learning time and number of iterations during learning process between each client node, and the intra aggregator or the inter-aggregator is guided by Stochastic Gradient Descent (SGD) optimization providing hierarchical optimization to enable training convergence of the final model for the target objective achieving an predefined ML model accuracy criteria.

7. The system (100) as claimed in claim 6, wherein during initial training iterations, data insufficiency present with a member in a group among the plurality of groups is augmented with synthetic data generated from time series based data augmentation techniques using generative Artificial Intelligence (Gen-AI) model.

8. The system (100) as claimed in claim 5, wherein the final model is deployed at each of the plurality of client nodes to predict the target objective value for real time inputs received during inferencing stage.

9. One or more non-transitory machine-readable information storage mediums comprising one or more instructions which when executed by one or more hardware processors cause:

receiving from a plurality of client nodes, of a central distributed aggregator, willingness to participate in collaborative learning with data sharing within a participatory distributed confederate Machine Learning Operations (MLOps) framework, wherein each client node among the plurality of client nodes is **characterized by** a feature set;

segregating, of the central distributed aggregator, the plurality of client nodes into a plurality of groups comprising one or more members selected from among the plurality of client nodes based on an affinity index, wherein the affinity index is computed as normalized Root Mean Squared distance in a feature space of the feature set of the plurality of client nodes;

initiating learning at group level, of the central distributed aggregator, over a basic ML model shared by the central distributed aggregator to generate a learned ML model for a target objective, by a member of each group among the plurality of groups by enabling collaboration and data sharing within member of each group;

initiating aggregation of the central distributed aggregator, via an intra-group aggregator associated with each group, of the learned model of each member within a group and adjusting a set of hyperparameters and associated weights to generate a larger ML model for the group, wherein the larger model is shared with each member of the associated group for successive learning iterations; and

performing aggregation and tuning, of the central distributed aggregator via an inter-group aggregator from among a plurality of inter-group aggregators, of bias, weights and hyperparameters associated with the larger ML model from among a set of members across the plurality of groups that have at least partial mapping within the feature space in accordance with a feature matching criteria, wherein the aggregated and tuned weights and hyperparameters are learnt to generate a final ML model, and wherein the final ML model is shared with each of the plurality of client nodes.

10. The one or more non-transitory machine-readable information as claimed in claim 9, wherein learning time and number of iterations during learning process between each client node, and the intra aggregator or the inter-aggregator is guided by Stochastic Gradient Descent (SGD) optimization providing hierarchical optimization to enable training convergence of the final model for the target objective achieving an predefined ML model accuracy criteria.

11. The one or more non-transitory machine-readable information as claimed in claim 10, wherein during initial training iterations, data insufficiency present with a member in a group among the plurality of groups is augmented with synthetic data generated from time series based data augmentation techniques using generative Artificial Intelligence (Gen-AI) model.

12. The one or more non-transitory machine-readable information as claimed in claim 9, wherein the final model is deployed at each of the plurality of client nodes to predict the target objective value for real time inputs received during inferencing stage.

System<u>100</u>

| Processor(s) <u>104</u> | I/O Interface(s) <u>106</u> |

Memory <u>102</u>

Database <u>108</u>

Modules <u>110</u>

FIG. 1

**System 100**
**(MLOps framework)**

Central distributed Aggregator

Inter-group aggregators → Aggregator $_{11}$     Aggregator $_{12}$     Aggregator $_{13}$

Intra-group aggregators → Aggregator $_{21}$     Aggregator $_{22}$     Aggregator $_{23}$

Same model

Plurality of client nodes →

Node $_1$   Node $_2$

Group 1
(member1, member 2.....)

Group 2

Group 3...Group m
( single member having no commonality
with bigger groups)

Node $_n$

member n

FIG. 2A

FIG. 2B

**System 100 (MLOps framework)**

Client Node1 3, Client Node1 3, Client Node n

Arrows labeled: 1, 2, 4, 5, 1, 1, 4

**Aggregator**
- Affinity index compute
- Hierarchical Optimization by computing worker-time and server-time with SGD
- Larger Model using received hyperparameters & send back to the client nodes

6 Final Model

1. Willingness to participate

2. Selection based on affinity index

3. Learning at client nodes (Data augmentation using Gen-AI, post checking data sufficiency)

5. Updated hyperparameters to client nodes

4. Clientnodes send hyperparameters to aggregator

6. Final Model after stipulated iterations

Capture model metrics, data versions, hyperparameters in Distributed MLOPS framework

300

receiving from a plurality of client nodes, by one or more hardware processors of a central distributed aggregator, willingness to participate in collaborative learning with data sharing within a participatory distributed confederate Machine Learning Operations (MLOps) framework, wherein each client node among the plurality of client nodes is characterized by a feature set

302

segregating the plurality of client nodes, based on affinity index, into a plurality of groups comprising one or more members from among the plurality of client nodes, wherein the affinity index is a normalized Root Mean Squared distance in feature space of the plurality of client nodes

304

initiating learning at group level, over a basic ML model from the central distributed aggregator to generate a learned ML model for a target objective, by a member of each group among the plurality of groups by enabling collaboration and data sharing within members of each group

306

A

FIG. 3A

300

(A)

initiating aggregation via an intra-group aggregator associated with each group, aggregation of the learned model of each member within a group and adjusting a set of hyperparameters and weights to generate a larger ML model for the group, wherein the larger model is shared with each member of the associated group for successive learning iterations — 308

performing aggregating and tuning via an inter-group aggregator from among a plurality of inter-group aggregators, bias, weights and hyperparameters associated with the larger ML model from among a set of members across the plurality of groups that have at least partial mapping within the feature space in accordance with a feature matching criteria, wherein the aggregated and tuned weights and hyperparameters are learnt to generate a final ML model, and wherein the final ML model is shared with each of the plurality of client nodes — 310

**FIG. 3B**

## Loss comparision of each round

| Rounds | Loss | Loss | Target |
|--------|------|------|--------|
| 1 | 50 | 54 | 0 |
| 2 | 10 | 7 | 0 |
| 3 | 0 | 0 | 0 |
| 4 | 0 | 0 | 0 |

**FIG. 4A**

Accuracy comparison of clients in each round

| Rounds | Accuracy | Accuracy | Target |
|--------|----------|----------|--------|
| 1 | 0 | 0.15 | 1 |
| 2 | 0.55 | 0.7 | 1 |
| 3 | 0.97 | 0.99 | 1 |
| 4 | 1 | 1 | 1 |

FIG. 4B

Europäisches Patentamt
European Patent Office
Office européen des brevets

# EUROPEAN SEARCH REPORT

**Application Number**

EP 25 16 6242

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZACCONE RICCARDO ET AL: "Speeding up Heterogeneous Federated Learning with Sequentially Trained Superclients", 2022 26TH INTERNATIONAL CONFERENCE ON PATTERN RECOGNITION (ICPR), 21 August 2022 (2022-08-21), pages 3376-3382, XP093305292, DOI: 10.1109/ICPR56361.2022.9956084 ISBN: 978-1-6654-9062-7 * abstract * * page 3376 - page 3381 * * page A1, page A6 * | 1-12 | INV. G06N3/098 G06N3/045 |
| A | ZHAI ZHIWEI ET AL: "FedLEO: An Offloading-Assisted Decentralized Federated Learning Framework for Low Earth Orbit Satellite Networks", IEEE TRANSACTIONS ON MOBILE COMPUTING, IEEE SERVICE CENTER, LOS ALAMITOS, CA, US, vol. 23, no. 5, 11 August 2023 (2023-08-11), pages 5260-5279, XP011965575, ISSN: 1536-1233, DOI: 10.1109/TMC.2023.3304988 [retrieved on 2023-08-14] * the whole document * | 1-12 | |
| A | SHIH CHEN-HAN ET AL: "Information-Exchangeable Hierarchical Clustering for Federated Learning With Non-IID Data", GLOBECOM 2023 - 2023 IEEE GLOBAL COMMUNICATIONS CONFERENCE, IEEE, 4 December 2023 (2023-12-04), pages 231-236, XP034556589, DOI: 10.1109/GLOBECOM54140.2023.10436834 [retrieved on 2024-02-26] * the whole document * | 1-12 | |

**TECHNICAL FIELDS SEARCHED (IPC)**

G06N

The present search report has been drawn up for all claims

| Place of search | Date of completion of the search | Examiner |
|---|---|---|
| The Hague | 14 August 2025 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421047604